# EUROPÄISCHE PATENTANMELDUNG

(11) **EP 2 889 202 A1**
(43) Veröffentlichungstag der Anmeldung: **01.07.2015**
(21) Anmeldenummer: 14003661.7
(22) Anmeldetag: 29.10.2014
(51) Int. Cl.: B62B 5/04, B60T 3/00

(54) **Wegrollsperre für Einkaufswagen**

(30) Priorität: 06.11.2013 DE 202013009959 U
(71) Anmelder: Höcker, Marcel, 32052 Herford (DE)
(72) Erfinder: Höcker, Marcel, 32052 Herford (DE)
(74) Vertreter: Graf, Thorsten

(57) **Zusammenfassung**

Die vorliegende Erfindung betrifft eine Wegrollsperre für Einkaufswagen, welche auf einfache Weise (insbesondere blind, ohne genau hinzusehen) genutzt werden kann. Die Wegrollsperre 1; 1 a; 1 b für Einkaufswagen ist auf dem Boden, insbesondere auf der Fahrbahnfläche eines Parkplatzes, montierbar, wobei die Wegrollsperre 1; 1 a; 1 b rund, insbesondere kreisrund ist, einen gewölbten, erhöhten Rand 3 aufweist und in der Mitte eine Vertiefung b aufweist, welche von allen Seiten 360° einer Rolle eines Einkaufswagens angefahren werden kann und eingerichtet ist, eine Arretierung einer der Rollen des Einkaufwagens sicherzustellen. Die Zugänglichkeit von allen Seiten hat den Vorteil, dass der Einkaufswagen von allen Seiten auf die Wegrollsperre geschoben werden kann und auch in allen Richtungen wieder von der Wegrollsperre herunter geschoben werden kann.

## Beschreibung

Die Erfindung betrifft eine Wegrollsperre für Einkaufswagen, die auf dem Parkplatz eines Einkaufsmarktes montiert werden kann. Solche Wegrollsperren weisen meist eine Form auf, welche geometrisch mit einer Rolle eines Einkaufswagens korrespondiert. Die erfindungsgemäße Wegrollsperre ist darüber hinaus rund, weist an den Rändern bzw. an einem umlaufenden Rand eine wulstförmige Erhöhung auf und in der Mitte eine runde Vertiefung oder Kuhle. In diese Vertiefung kann eine Rolle des Einkaufswagens gefahren werden, wodurch dieser arretiert wird und nicht mehr wegrollen kann.

Nach dem Stand der Technik gibt es bereits verschiedene Ausführungsformen von Wegrollsperren für Einkaufswagen bzw. Rollen, die zur Blockierung der Rollen oder Räder am Boden dienen.

Es wird insoweit auf das Gebrauchsmuster DE 201 02 928 U1, auf die Patentanmeldungen DE 42 42 556 A1, EP 0 672 571 A1, auf das Gebrauchsmuster DE 20 2007 011 131 U1 sowie auf die Patentschrift GB 897 582 A verwiesen.

Die in diesen Druckschriften beschriebenen Vorrichtungen weisen den Nachteil auf, dass eine Rolle eines Einkaufswagens auf ganz bestimmte Weise daran oder darin zu positionieren ist.

Der Erfindung liegt die Aufgabe zugrunde, eine Wegrollsperre für Einkaufswagen bzw. Rollen der eingangs beschriebenen Art zu entwickeln, welche die Handhabung des Einkaufswagens erleichtert.

Diese Aufgabe wird erfindungsgemäß dadurch gelöst, dass das Profil der Wegrollsperre rund ausgeformt ist mit einem seitlichen, gleichmäßig erhöhten Rand und einer in der Mitte befindlichen Kuhle aufweist. Diese Wegrollsperre weist eine von allen Seiten richtungsunabhängig aus allen Richtungen 360° ohne vorherige Ausrichtung der Rollen anfahrbaren Fläche auf. Die Zugänglichkeit von allen Seiten hat den Vorteil, dass der Einkaufswagen von allen Seiten auf die Wegrollsperre geschoben werden kann und auch in allen Richtungen wieder von der Wegrollsperre herunter geschoben werden kann. Hierdurch kann die Wegrollsperre auf einfache Weise (insbesondere blind, ohne genau hinzusehen) genutzt werden, insbesondere mit nur einer den Einkaufswagen schiebenden Hand, um z.B. mit der anderen Hand eine Kofferraumklappe öffnen zu können. Dabei ist die Vertiefung zur Aufnahme der Rolle vorgesehen, so dass irgendeine Keilfunktion der Wegrollsperre nicht erforderlich ist. Die Wegrollsperre kann auf einfache Weise auf dem Boden abgelegt werden und liefert ausreichend Halt, um in Position zu bleiben, wenn der Einkaufswagen darauf gerollt wird. Die Wegrollsperre muss nicht einmal am Boden befestigt werden, sondern kann auch als mobile Variante in jedem PKW mitgeführt werden.

Das erfindungsgemässe Profil für die Wegrollsperre ermöglicht das Anfahren aus allen denkbaren Richtungen mit dem Einkaufswagen und verhindert das Wegrollen. Eine Ausrichtung der Räder ist nicht notwendig. Im Gegensatz dazu können die aus dem Stand der Technik bekannten Vorrichtungen nicht aus allen Richtungen mit den Rollen eines Einkaufswagens angefahren werden und können damit nicht richtungsunabhängig aus allen Richtungen 360° umlaufend genutzt werden. Bei diesen Vorrichtungen müssten die Rollen vor der Nutzung außerdem ausgerichtet werden, da die Rollen eines Einkaufswagens üblicherweise in jede Richtung um eine eigene (vertikale) Achse schwenkbar sind.

Gemäß einem Ausführungsbeispiel ist der erhöhte Rand vollständig umlaufend und rund, insbesondere kreisrund ausgebildet. Hierdurch kann der Einkaufswagen nicht nur aus bestimmten Richtungen, sondern tatsächlich aus jedem beliebigen Winkel auf die Wegrollsperre geschoben werden.

Gemäß einem bevorzugten Ausführungsbeispiel ist die Wegrollsperre eine mobile Wegrollsperre, welche eingerichtet ist, auf dem Boden ohne Befestigung am Boden abgelegt zu werden, um eine Rolle des Einkaufswagens aufzunehmen. Hierdurch kann eine Wegrollsperre für jedermann bereitgestellt werden, welche auch bei Supermärkten verwendet werden kann, bei welchen keine Wegrollsperren vormontiert sind. Bevorzugt weist die Wegrollsperre eine im Wesentlichen ebene Unterseite auf, auf welcher die Wegrollsperre abgelegt werden kann. Weiter bevorzugt ist die Unterseite mit einer Rauhigkeit oder einer Struktur versehen, welche eine Haftung der Wegrollsperre auf dem Boden verbessert.

Gemäß einem Ausführungsbeispiel weist die Wegrollsperre eine im Wesentlichen ebene Unterseite oder unterseitige Auflagefläche auf und ist dadurch eingerichtet, von einer Rolle eines Einkaufswagens überfahren zu werden, ohne sich relativ zu einer ebenen Bodenfläche zu bewegen oder zu verlagern. Dies ermöglicht eine einfache Handhabung. Die Wegrollsperre braucht nur schnell auf den Boden gelegt werden, und schon kann der Einkaufswagen darauf gerollt werden, selbst wenn der Boden ein leichtes Gefälle aufweist.

Gemäß einem Ausführungsbeispiel weist die Wegrollsperre einen unteren Rand auf, der bevorzugt vollständig umlaufend und rund, insbesondere kreisrund ausgebildet ist. Hierdurch kann die Wegrollsperre auf stabile Weise auf dem Boden fixiert, insbesondere auch umlaufend vorgespannt werden. Gemäß einer Variante ist ein solcher unterer Rand nicht notwendigerweise vorgesehen. Der untere Rand kann wahlweise entfallen, insbesondere bei einer mobilen Variante der Wegrollsperre. Durch den unteren Rand kann der Gesamtdurchmesser der Wegrollsperre reduziert werden, oder es kann auch eine Abrundung erfolgen, welche die Haptik und Handhabung verbessern kann, insbesondere auch beim Wiederaufheben einer auf dem Boden zwischenzeitlich abgelegten Wegrollsperre. Der untere Rand kann auch eine Kante bereitstellen, an welcher die Wegrollsperre leichter wieder ergriffen werden kann.

Gemäß einem Ausführungsbeispiel ist die Vertiefung kugelsegmentförmig und geometrisch korrespondierend zu einer Rolle eines Einkaufswagens ausgebildet, insbesondere konkav mit einem einheitlichen Krümmungsradius gewölbt. Hierdurch kann die Vertiefung eine Aufnahmefläche bereitstellen, welche die Rolle bzw. den Einkaufswagen in einer genau vorgegebenen Position positioniert.

Gemäß einem Ausführungsbeispiel ist im Bereich der Vertiefung eine Montageöffnung zur Montage der Wegrollsperre auf dem Boden vorgesehen ist, insbesondere mittig an einer tiefsten Stelle der Vertiefung. Hierdurch kann die Wegrollsperre umlaufend symmetrisch ausgebildet sein und an einer Stelle montiert werden, an welcher ein Montagemittel oder Befestigungsmittel nicht im Weg ist für eine Rolle, die auf die Wegrollsperre geschoben werden soll.

Gemäß einem Ausführungsbeispiel weist die Wegrollsperre zwischen dem erhöhten Rand und einem/dem unteren Rand einen umlaufenden Abschnitt auf, welcher konvex gewölbt ist. Hierdurch kann eine Rampe gebildet werden, über welche die Rolle bzw. der Einkaufswagen in die vordefinierte Position bzw. in die Vertiefung geschoben werden kann. Der Abschnitt kann eine Auffahrrampe bilden. Die Rampe bzw. der Abschnitt kann z.B. in einem Winkel von 20°bis 30° gegenüber der horizontalen Ebene oder der Unterseite ausgerichtet sein, insbesondere in einem Winkel von etwa 24° oder 25°. Eine konvexe Wölbung kann dabei durch einen Krümmungsradius im Bereich von z.B. 30mm bis 50mm sichergestellt werden, insbesondere 40mm. Die Breite des Abschnitts bzw. der Rampe beträgt bevorzugt zwischen 20mm und 30mm, insbesondere etwa 26mm. Diese Abmessungen bzw. geometrischen Eigenschaften können eine Wegrollsperre mit einem geringen Widerstand gegenüber einer Rolle und gleichzeitig auch mit einem festen Halt auf dem Boden sicherstellen.

Der umlaufende Abschnitt kann dabei auch durch unterschiedliche Krümmungsradien in einzelnen Abschnitten gekennzeichnet sein. Beispielsweise besteht der Abschnitt aus drei Teilabschnitten mit jeweils spezifischem Krümmungsradius. Der Krümmungsradius liegt dabei bevorzugt jeweils unter 10mm, weiter bevorzugt zwischen 3mm und 10mm, insbesondere bei 7.6mm.

Gemäß einem Ausführungsbeispiel weist der Abschnitt einen Krümmungsradius im Bereich von 35mm bis 45mm auf, insbesondere 40mm. Hierdurch kann eine Rampe mit einer zweckdienlichen Kontur bereitgestellt werden, um auch schwer beladene Einkaufswagen auf vergleichsweise widerstandsarme Weise auf die Wegrollsperre schieben zu können.

Gemäß einem Ausführungsbeispiel weist die Wegrollsperre eine Höhe im Bereich von 7mm bis 12mm auf, bevorzugt 8mm bis 11mm, insbesondere 9mm oder 10mm. Hierdurch, insbesondere durch die vergleichsweise flache Form, kann eine Wegrollsperre bereitgestellt werden, welche nur einen kleinen Widerstand bzw. nur ein kleines Hindernis für die Rolle bildet. Mit anderen Worten: Bei dieser Höhe kann die Wegrollsperre auf einfache Weise überfahren werden und gleichzeitig guten Halt für eine Rolle liefern. Es hat sich gezeigt, dass bei diesen Abmessungen ein guter Kompromiss zwischen zu überwindendem Hindernis und Halt sichergestellt werden kann. Dabei kann die Wegrollsperre eine untere Kante oder einen unteren Rand aufweisen, welcher eine Höhe im Bereich von 2mm bis 5mm aufweist, insbesondere 3mm oder 4mm, z.B. 3.77mm. Diese Abmessungen erleichtern das Wiederaufnehmen einer nur zeitweise auf dem Boden abgelegten Wegrollsperre.

Gemäß einem Ausführungsbeispiel liegt ein tiefster Punkt der Vertiefung höher als der untere Rand der Wegrollsperre. Hierdurch kann eine Vorspannung zwischen dem unteren Rand und dem tiefsten Punkt der Vertiefung hervorgerufen werden, so dass die Wegrollsperre sicher und verdrehfest montierbar ist.

Gemäß einem Ausführungsbeispiel ist die Wegrollsperre aus einem Kunststoff-Material, insbesondere Polyethylen HD, oder aus Metall, insbesondere Aluminium, legiertem Stahl, Guss oder Hybriden daraus, oder aus Keramik ausgebildet. Eine Herstellung kann mit allen diesen Materialien erfolgen. Es hat sich gezeigt, dass alle diese Materialien ausreichend robust sind und auch ausreichend wetterbeständig. Bevorzugt wird ein Kunststoff-Material, insbesondere Polyethylen HD verwendet, wobei die Herstellung bevorzugt mittels Spritzgussverfahren erfolgt.

Gemäß einem Ausführungsbeispiel weist die Vertiefung einen Krümmungsradius im Bereich von 100mm bis 150mm, bevorzugt 115mm bis 135mm, weiter bevorzugt zwischen 120mm und 130mm auf. Hierdurch kann eine Aufnahmefläche für eine Rolle gebildet werden, in welcher die Rolle sicher gelagert werden kann.

Gemäß einem Ausführungsbeispiel ist die Wegrollsperre ein einstückiges Teil, insbesondere aus einem einzigen Material. Hierdurch kann die Wegrollsperre besonders robust ausgebildet werden oder auch auf einfache Weise hergestellt werden oder auch leicht montiert werden.

Gemäß einem bevorzugten Ausführungsbeispiel weist die Wegrollsperre wenigstens eine Riefe oder einen Kanal auf, welche(r) bevorzugt in radialer Richtung zwischen der Vertiefung und dem unteren Rand der Wegrollsperre verläuft, insbesondere mit einem Gefälle. Hierdurch kann eine Entwässerung der Vertiefung erfolgen. Das Gefälle beträgt z.B. 1°, oder 2°, oder auch mehr Grad, insbesondere in Abhängigkeit der Anzahl oder der Breite der Riefe(n), so dass Wasser ablaufen kann. Die Anzahl der Riefen kann weitgehend frei gewählt werden, z.B. zwischen einer Riefe und drei oder fünf oder noch mehr Riefen.

Gemäß einem Ausführungsbeispiel weist die Wegrollsperre im Bereich der Vertiefung wenigstens ein Loch, bevorzugt eine Mehrzahl von Löchern auf, welche(s) derart dimensioniert ist/sind, dass Regenwasser durch das Loch bzw. die Löcher fließen kann. Bevorzugt sind die Löcher minimal groß, also z.B. im Bereich von 1 mm bis 2mm.

Gemäß einem Ausführungsbeispiel ist die Wegrollsperre ein Umformteil oder ein Spritzgussteil, bevorzugt ein Spritzgussteil aus Kunststoff. Hierdurch kann eine Wegrollsperre mit guten haptischen Eigenschaften bereitgestellt werden, insbesondere auch eine mobile Wegrollsperre. Hierdurch können große Stückzahlen auf kostengünstige Weise hergestellt werden.

Weitere Einzelheiten der Erfindung werden in den folgenden Zeichnungsfiguren anhand schematisch dargestellter Ausführungsbeispiele beschrieben. Dabei zeigen:
Figuren 1 bis 3 in unterschiedlichen Ansichten eine Wegrollsperre gemäß einem ersten Ausführungsbeispiel der vorliegenden Erfindung;
Figuren 4A bis 4C in weiteren unterschiedlichen Ansichten die in den Figuren 1 bis 3 gezeigte Wegrollsperre;
Figuren 5A bis 5C in unterschiedlichen Ansichten eine Wegrollsperre gemäß einem zweiten Ausführungsbeispiel der vorliegenden Erfindung; und
Figuren 6A bis 6C in unterschiedlichen Ansichten eine Wegrollsperre gemäß einem dritten Ausführungsbeispiel der vorliegenden Erfindung.

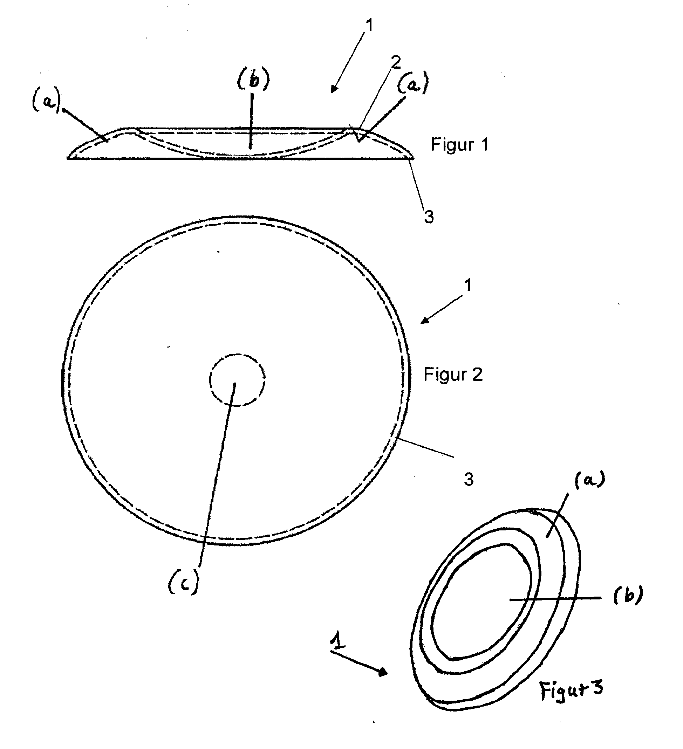

Hierbei zeigen die Figuren 1 bis 6C Folgendes.

Figur 1 zeigt eine Wegrollsperre 1 im Profil in der seitlichen Darstellung, so wie sie in der Horizontalen auf dem Parkplatz montiert wird. Die Wegrollsperre 1 besteht aus einem seitlichen umlaufenden Wulst (a) sowie einer runden Absenkung (b) in der Mitte.

Figur 2 zeigt eine Ansicht von unten auf die Unterseite der Wegrollsperre 1. In der Mitte (c) ist ein Loch zur Montage auf der Parkfläche vorhanden, oder, gemäß einer Variante, eine Klebe-Kante (c) an einer Unterseite der Wegrollsperre. Die Wegrollsperre 1 kann am Boden verklebt werden. Wahlweise kann die Wegrollsperre 1 auch als mobile Wegrollsperre verwendet werden, ohne dass eine Befestigung am Boden erfolgen muss.

Figur 3 zeigt eine perspektivische Ansicht auf eine Vorderseite der Wegrollsperre 1. In der Figur 3 sind der Wulst (a) und die Vertiefung (b) erkennbar.

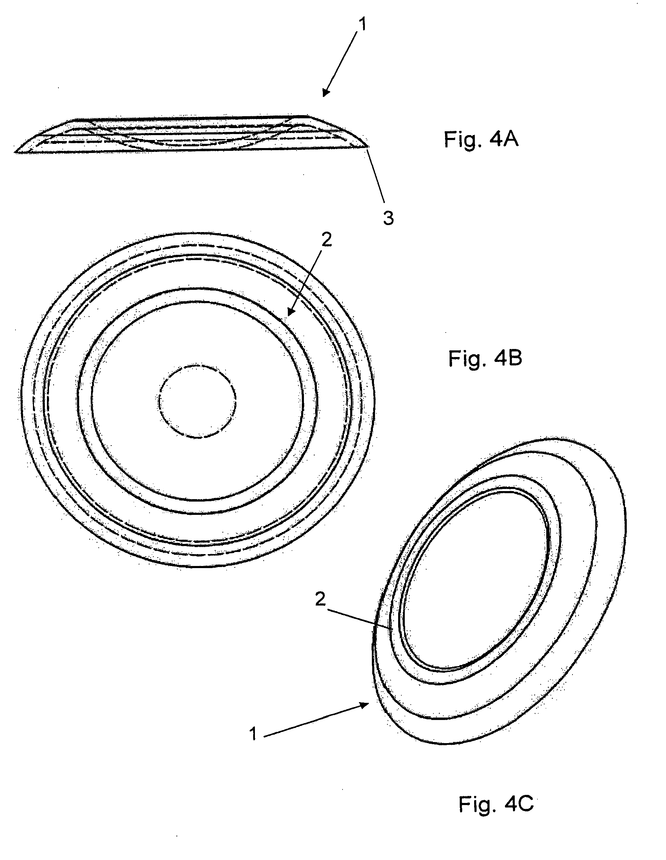

Die Figuren 4A bis 4C zeigen in einer seitlichen Darstellung, in einer Ansicht von oben (Draufsicht) sowie in einer perspektivischen Ansicht auf eine Vorderseite die Wegrollsperre 1.

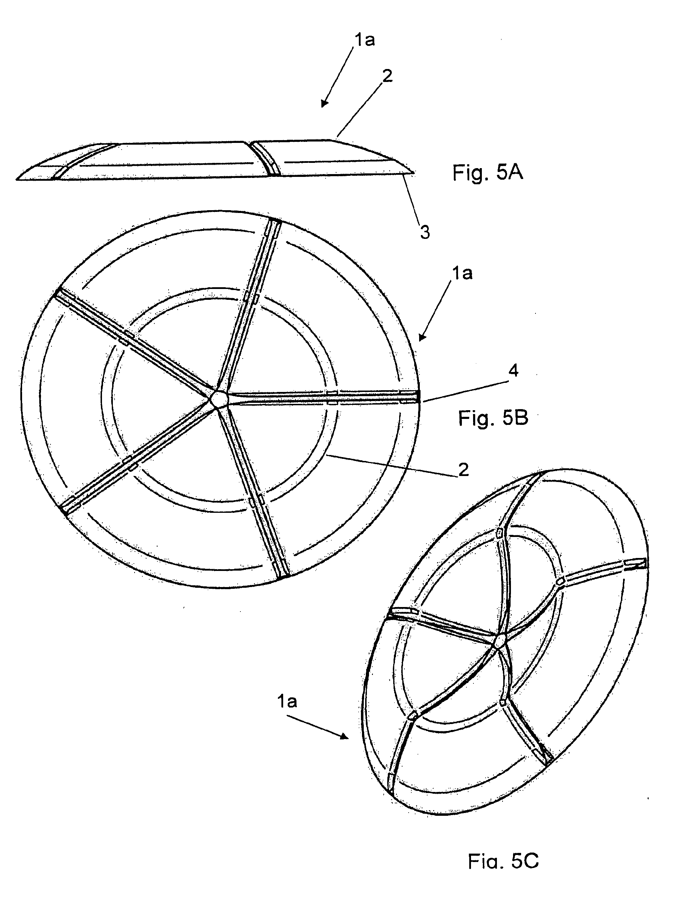

Die Figuren 5A bis 5C zeigen in einer seitlichen Darstellung, in einer Ansicht von oben (Draufsicht) sowie in einer perspektivischen Ansicht auf eine Vorderseite eine Wegrollsperre 1a, welche zusätzlich zu den zuvor beschrieben Komponenten auch mehrere Riefen, Nuten, Rinnen oder Radialfurchen 4 aufweist, welche sich sternförmig in Richtung der Absenkung (b) erstrecken. Durch diese Riefen 4 kann eine Entwässerung erfolgen, z.B. für den Fall dass sich in der Absenkung (b) Regenwasser sammelt. Die Riefen 4 weisen bevorzugt ein Gefälle von der Mitte nach radial außen auf.

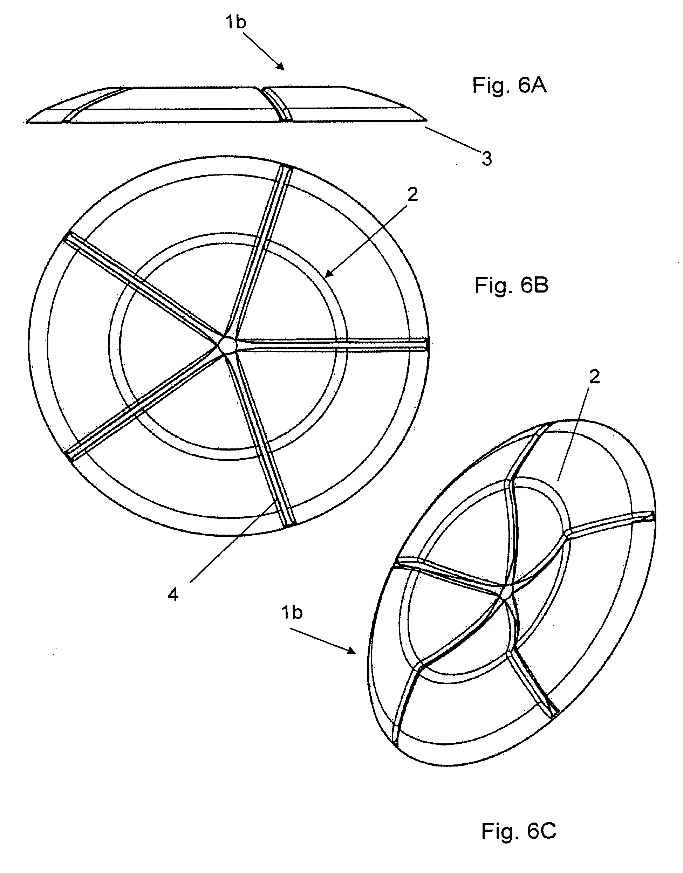

Die Figuren 6A bis 6C zeigen in einer seitlichen Darstellung, in einer Ansicht von oben (Draufsicht) sowie in einer perspektivischen Ansicht auf eine Vorderseite eine Wegrollsperre 1b, welche zusätzlich zu den zuvor beschrieben Komponenten auch mehrere Riefen, Nuten, Rinnen oder Radialfurchen 4 aufweist, wie im Zusammenhang mit den Figuren 5A bis 5C beschrieben.

### Bezugszeichenliste

- 1: Wegrollsperre
- 1 a: Wegrollsperre gemäß einer Variante
- 1 b: Wegrollsperre gemäß einer Variante
- 2: umlaufender unterer Rand
- 3: umlaufender erhöhter Rand
- 4: Riefe, Kanal, Nut, Rinne oder Radialfurche
- (a): Wulst
- (b): runde Vertiefung der
- (c): Loch, Montageöffnung oder Kleb-Kante, insbesondere mittig an der Unterseite Wegrollsperre

## Patentansprüche

1. Wegrollsperre (1;1a;1b) für Einkaufswagen, die auf dem Boden, insbesondere auf der Fahrbahnfläche eines Parkplatzes, montierbar ist, **dadurch gekennzeichnet, dass** die Wegrollsperre (1; 1a; 1b) rund, insbesondere kreisrund ist, einen gewölbten, erhöhten Rand (3) aufweist und in der Mitte eine Vertiefung (b) aufweist, welche von allen Seiten 360° einer Rolle eines Einkaufswagens angefahren werden kann und eingerichtet ist, eine Arretierung einer der Rollen des Einkaufwagens sicherzustellen.

2. Wegrollsperre nach Anspruch 1, **dadurch gekennzeichnet, dass** der erhöhte Rand (3) vollständig umlaufend ist und rund, insbesondere kreisrund ausgebildet ist.

3. Wegrollsperre nach Anspruch 1 oder 2, **dadurch gekennzeichnet, dass** die Vertiefung (b) kugelsegmentförmig ist und geometrisch korrespondierend zu einer Rolle eines Einkaufswagens ausgebildet ist, insbesondere konkav mit einem einheitlichen Krümmungsradius gewölbt ist.

4. Wegrollsperre nach einem der vorhergehenden Ansprüche, **dadurch gekennzeichnet, dass** die Vertiefung (b) einen Krümmungsradius von 100mm bis 150mm, bevorzugt 115mm bis 135mm, weiter bevorzugt zwischen 120mm und 130mm aufweist.

5. Wegrollsperre nach einem der vorhergehenden Ansprüche, **dadurch gekennzeichnet, dass** die Wegrollsperre eine mobile Wegrollsperre ist, welche eingerichtet ist, auf dem Boden ohne Befestigung am Boden abgelegt zu werden, um eine Rolle eines Einkaufswagens aufzunehmen.

6. Wegrollsperre nach Anspruch 5, **dadurch gekennzeichnet, dass** die Wegrollsperre eine im Wesentlichen ebene Unterseite oder unterseitige Auflagefläche aufweist und dadurch eingerichtet ist, von einer Rolle eines Einkaufswagens überfahren zu werden, ohne sich relativ zu einer ebenen Bodenfläche zu bewegen oder zu verlagern.

7. Wegrollsperre nach einem der vorhergehenden Ansprüche, **dadurch gekennzeichnet, dass** im Bereich der Vertiefung (b) eine Montageöffnung oder Klebe-Kante (c) zur Montage der Wegrollsperre auf dem Boden vorgesehen ist, insbesondere mittig an einer tiefsten Stelle der Vertiefung (b).

8. Wegrollsperre nach einem der vorhergehenden Ansprüche, **dadurch gekennzeichnet, dass** die Wegrollsperre zwischen dem erhöhten Rand (3) und einem/dem unteren Rand (2) einen umlaufenden Abschnitt aufweist, welcher konvex gewölbt ist.

9. Wegrollsperre nach Anspruch 8, **dadurch gekennzeichnet, dass** der Abschnitt einen Krümmungsradius im Bereich von 35mm bis 45mm auf, insbesondere 40mm aufweist.

10. Wegrollsperre nach einem der vorhergehenden Ansprüche, **dadurch gekennzeichnet, dass** die Wegrollsperre (1; 1 a; 1 b) eine Höhe im Bereich von 7mm bis 12mm aufweist, bevorzugt 8mm bis 11mm, insbesondere 9mm oder 10mm.

11. Wegrollsperre nach einem der vorhergehenden Ansprüche, **dadurch gekennzeichnet, dass** ein tiefster Punkt der Vertiefung (b) höher liegt als ein/der untere Rand (2) der Wegrollsperre.

12. Wegrollsperre nach einem der vorhergehenden Ansprüche, **dadurch gekennzeichnet, dass** die Wegrollsperre aus einem Kunststoff-Material, insbesondere Polyethylen HD, oder aus Metall, insbesondere Aluminium, legiertem Stahl, Guss oder Hybriden daraus, oder aus Keramik ausgebildet ist.

13. Wegrollsperre nach einem der vorhergehenden Ansprüche, **dadurch gekennzeichnet, dass** die Wegrollsperre ein einstückiges Teil ist, insbesondere aus einem einzigen Material.

14. Wegrollsperre nach einem der vorhergehenden Ansprüche, **dadurch gekennzeichnet, dass** die Wegrollsperre wenigstens eine Riefe (4) aufweist, welche bevorzugt in radialer Richtung zwischen der Vertiefung (b) und einem/dem unteren Rand (2) der Wegrollsperre verläuft, insbesondere mit einem Gefälle, oder dass die Wegrollsperre im Bereich der Vertiefung wenigstens ein Loch, bevorzugt eine Mehrzahl von Löchern aufweist, welche(s) derart dimensioniert ist/sind, dass Regenwasser durch das Loch bzw. die Löcher fließen kann.

15. Wegrollsperre nach einem der vorhergehenden Ansprüche, **dadurch gekennzeichnet, dass** die Wegrollsperre ein Umformteil oder ein Spritzgussteil ist, bevorzugt ein Spritzgussteil aus Kunststoff.
